# EUROPÄISCHE PATENTANMELDUNG

(11) **EP 1 795 793 A1**
(43) Veröffentlichungstag der Anmeldung: **13.06.2007**
(21) Anmeldenummer: 06018912.3
(22) Anmeldetag: 09.09.2006
(51) Int. Cl.: F16L 3/20

(54) **Befestigungssystem**

(30) Priorität: 10.12.2005 DE 102005059119
(71) Anmelder: HYDAC Accessories GmbH, 66280 Sulzbach/Saar (DE)
(72) Erfinder: Kasubke, Volker, 66540 Neunkirchen (DE)
(74) Vertreter: Bartels & Partner

(57) **Zusammenfassung**

Ein Befestigungssystem, um Halteelemente (13) für die Aufnahme von Bauteilen lageeinstellbar an einer tragenden Basis zu fixieren, weist eine sich zwischen Halteelement (13) und Basis erstreckende, längeneinstellbare Trägereinheit auf, die zwei aneinander längs verschiebbare, jeweils rechtwinklige und gleichschenklige Winkelprofile (1, 3) aufweist, von denen das eine Winkelprofil (1) längs seiner Schenkelenden je eine in das Innere des Profils ragende Führungskante (5) aufweist, die jede eine zum angrenzenden Schenkel senkrechte und zum entfernten Schenkel parallele Führungsfläche (7) für anliegende Schenkelteile des anderen Winkelprofils (3) bildet.

## Beschreibung

Die Erfindung bezieht sich auf ein Befestigungssystem, um Halteelemente für die Aufnahme von Bauteilen lageeinstellbar an einer tragenden Basis zu fixieren.

An betreffenden Montageorten, etwa bei Einbau oder Aufbau technischer Anlagen, müssen Halteelemente, die als Systemkomponenten dienende Bauteile aufnehmen sollen, in genau eingestellter Lagebeziehung zu zugeordneten, ortsfesten Basisstellen befestigt werden. Wenn es sich bei den Halteelementen beispielsweise um Schellen zur Festlegung von rohr- oder strangartigen Bauteilen, beispielsweise von Rohrleitungen, handelt, die Systemkomponenten bilden, ist eine gegebene Lagebeziehung zwischen Halteelement und tragender Basis erforderlich, damit sich ein gewünschter Verlauf der in der Schelle gehaltenen Leitung ergibt. Man ist daher gezwungen, je nach Einbausituation Trägereinheiten unterschiedlicher Baulängen für die Befestigung der Halteelemente zu benutzen. In der Montagepraxis bedeutet dies, dass in nachteiliger Weise Befestigungssysteme unterschiedlicher Dimensionierung vorgehalten werden müssen.

Die Erfindung stellt sich im Hinblick hierauf die Aufgabe, ein universeller verwendbares Befestigungssystem zur Verfügung zu stellen, das es ermöglicht, bei einheitlichem Aufbau verschiedene Montageaufgaben abzudekken.

Erfindungsgemäß ist diese Aufgabe durch ein Befestigungssystem gelöst, das die Merkmale des Patentanspruches 1 in seiner Gesamtheit aufweist.

Dadurch, dass erfindungsgemäß zwei aneinander verschiebbar geführte Winkelprofile eine längeneinstellbare Trägereinheit bilden, ist nicht nur die erstrebte universellere Verwendbarkeit erreicht, weil sich auf einfache Weise eine gewünschte Lagebeziehung des Halteelementes zur Basis erreichen läßt, sondern die Verwendung zweier aneinander geführter Winkelprofile gewährleistet auch eine hohe Strukturfestigkeit des Befestigungssystems.

Eine besonders sichere, formschlüssige Führung der Winkelprofile ergibt sich bei Ausführungsbeispielen, bei denen die Länge der Schenkel des die Führungskanten aufweisenden Winkelprofils um die Materialstärke der Führungskanten größer ist als die Länge der Schenkel des anderen Winkelprofils und die Führungskanten an den Schenkelenden des zugehörigen Winkelprofils so angeordnet sind, dass die für die Anlage des anderen Winkelprofils verbleibende freie Schenkellänge durch die Materialstärke der Führungskanten an die kürzere Länge der Schenkel des letztgenannten Winkelprofils angepaßt wird.

Die Winkelprofile können hierbei derart aneinander geführt sein, dass das die kürzeren Schenkel aufweisende Winkelprofil an seiner Profilaußenseite mit beiden Schenkeln ganzflächig an den Schenkeln des die Führungskanten aufweisenden Winkelprofils und mit den Endrändern seiner Schenkel an den ins Profilinnere weisenden Führungsflächen der Führungskanten des diese aufweisenden Winkelprofils geführt ist. Bei solcher Orientierung der Winkelprofile zueinander ergibt sich für die Trägereinheit eine offene Profilgestaltung, bei der die Winkelprofile in der jeweils gewünschten Lageeinstellung (Längeneinstellung der Trägereinheit) auf besonders einfache Weise aneinander fixiert werden können, weil die Schenkel beider Schenkelprofile großflächig aneinander anliegen.

Alternativ kann das die kürzeren Schenkel aufweisende Winkelprofil an seinen Schenkelenden an der ins Innere des Profils weisenden Führungsfläche der Führungskanten des diese aufweisenden Winkelprofils geführt sein. Dadurch ergibt sich für die Trägereinheit eine kastenartige, geschlossene Profilform in der Art eines Vierkantrohres, was eine für bestimmte Anwendungszwecke günstige Bauform darstellt.

Vorzugsweise ist das die längeren Schenkel aufweisende Winkelprofil der Trägereinheit mit der Basis verbunden und das die kürzeren Schenkel aufweisende Winkelprofil ist mit dem Halteelement in Verbindung. Hierbei ergibt sich eine besonders hohe Strukturfestigkeit, weil das das größere Materialvolumen aufweisende Winkelprofil der tragenden Basis zugeordnet ist.

Für die Anbringung des Halteelementes kann dieses an einer Trägerplatte angeordnet sein, die sich am Ende des die kürzeren Schenkel aufweisenden Winkelprofils senkrecht zur Verschieberichtung der längeneinstellbaren Trägereinheit erstreckt. Mit einer solchen Trägerplatte kann das betreffende Halteelement, beispielsweise in Form einer Befestigungsschelle für rohr- oder strangartige Bauteile, verschraubt sein.

Um die Längeneinstellung der Trägereinheit festzulegen, können die Winkelprofile mittels einer form- oder kraftschlüssigen Verbindung aneinander festgelegt werden, beispielsweise durch Schweißen, Kleben, Schrauben oder Klemmen. Für die Bildung einer kraftschlüssigen Fixierung mittels Verschrauben können Langlöcher in einem und/oder beiden Schenkeln der Winkelprofile vorgesehen sein.

Nachstehend ist die Erfindung anhand der Zeichnung im einzelnen erläutert. Es zeigen:
- Fig. 1 eine abgeschnitten gezeichnete, perspektivische Schrägansicht lediglich eines Teilabschnittes der Trägereinheit eines Ausführungsbeispieles des erfindungsgemäßen Befestigungssystemes;
- Fig. 1A einen gegenüber Fig. 1 in kleinerem Maßstab gezeichneten Schnitt entsprechend der Linie I-I von Fig. 1;
- Fig. 2 eine der Fig. 1 ähnliche Schrägansicht, wobei ein Winkelprofil gegenüber Fig. 1 in um 180° verdrehter Einbauposition gezeigt ist;
- Fig. 2A einen gegenüber Fig. 2 in kleinerem Maßstab gezeichneten Schnitt entsprechend der Linie II-II von Fig. 2;
- Fig. 3 eine perspektivische Schrägansicht des Ausführungsbeispieles des Befestigungssystemes, wobei die Winkelprofile in der der Fig. 2 entsprechenden Einbauposition, jedoch auseinander gezogen, dargestellt sind;
- Fig. 4 eine der Fig. 3 ähnliche Darstellung, wobei die Winkelprofile jedoch teilweise zusammengefahren dargestellt sind, und
- Fig. 5 eine der Fig. 4 ähnliche Darstellung, wobei die Winkelprofile jedoch in der der Fig. 1 entsprechenden Einbauposition gezeigt sind.

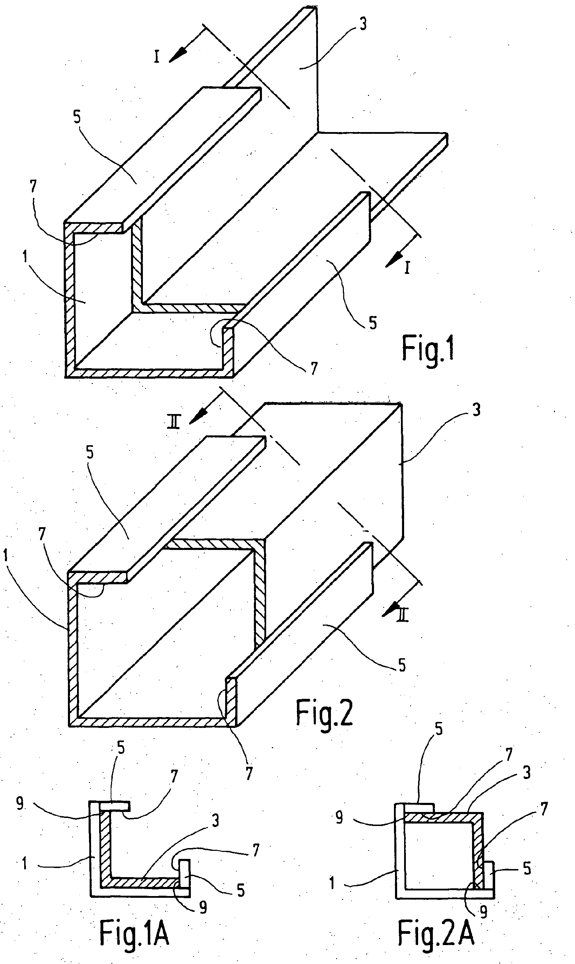

Fig. 1 bis 2A verdeutlichen den prinzipiellen Aufbau der längeneinstellbaren Trägereinheit des erfindungsgemäßen Befestigungssystemes. Dabei zeigen Fig. 1 und 1A Winkelprofile 1 und 3 in solcher Einbauposition, dass sich für die Trägereinheit eine offene Profilgestaltung ergibt. Wie insbesondere aus Fig. 1A zu ersehen ist, sind beide Winkelprofile 1 und 3 rechtwinklige gleichschenklige Profile, wobei das äußere Winkelprofil 1 eine größere Schenkellänge besitzt als das andere Winkelprofil 3. An den freien Schenkelenden des Winkelprofiles 1 sind Führungskanten 5 vorgesehen, die senkrecht zur Ebene des angrenzenden Schenkels verlaufende Führungsflächen 7 bilden. Wie ebenfalls aus Fig. 1A zu ersehen ist, ist die Länge der Schenkel des anderen, innenliegenden Winkelprofiles 3 geringer als die Länge der Schenkel des Winkelprofiles 1, und zwar sind die Schenkel des Winkelprofiles 3 um die Materialstärke der Führungskanten 5 kürzer, so dass das Winkelprofil 3 mit den Endrändern 9 seiner Schenkel an den Führungsflächen 7 der Führungskanten 5 geführt ist.

Bei der Variante 2 und 2A ist die Länge der Schenkel der Winkelprofile 1 und 3 in gleicher Weise unterschiedlich wie bei der Variante von Fig. 1 und 1A. Die Einbauposition ist jedoch so, dass das die kürzeren Schenkel aufweisende Winkelprofil 3 an seinen Schenkelenden an den ins Innere des Profils weisenden Führungsflächen 7 der Führungskanten 5 des Winkelprofiles 1 geführt sind.

Während bei der Variante von Fig. 1 und 1A die Schenkel beider Winkelprofile 1 und 3 großflächig aneinander liegen, so dass sich, wie unten noch näher erläutert wird, die gegenseitige Lagefixierung der Winkelprofile 1 und 3 in vorteilhafter Weise besonders einfach gestaltet, zeichnet sich die Variante gemäß Fig. 2 und 2A dadurch aus, dass ein geschlossenes kastenartiges Gesamtprofil in der Art eines Vierkantrohres gebildet wird. In vorteilhafter Weise ergibt sich hierdurch eine besonders hohe Strukturfestigkeit der Trägereinheit.

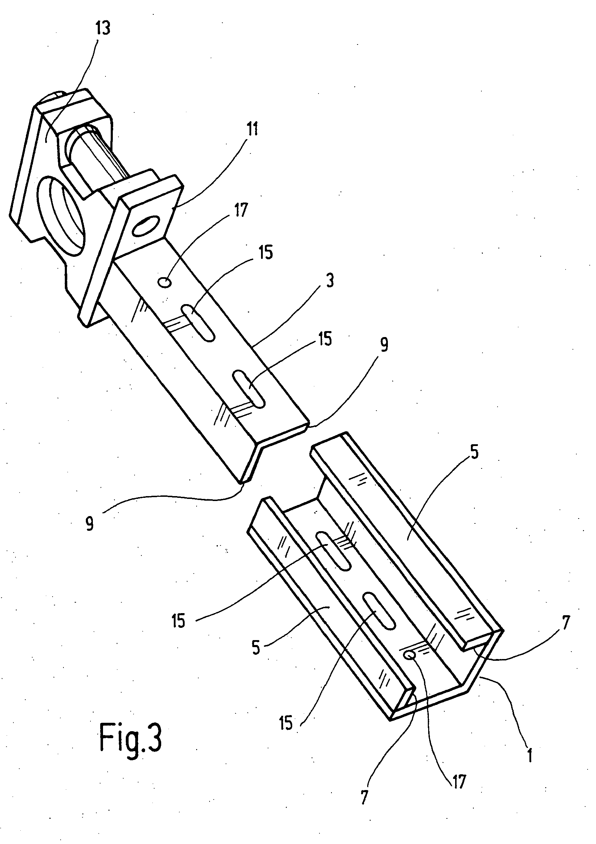

Die Fig. 1A und 2A zeigen, ebenso wie die Fig. 3 bis 5, dass die Führungskanten 5 durch gesonderte Teile gebildet sind, nämlich durch Leisten rechteckigen Querschnittes, die entlang der Enden der Schenkel des Winkelprofiles 1 so angebracht (angeschweißt) sind, dass die Führungsflächen 7 Ebenen bilden, die zur Ebene des angrenzenden Schenkels senkrecht sind. Demgegenüber sind gemäß der Darstellung von Fig. 1 und 2 die Führungskanten 5 integraler Bestandteil des Winkelprofiles 1, das in diesem Falle in seiner endgültigen Form durch ein Strangpressverfahren hergestellt sein kann. Alternativ könnten die Führungskanten 5 durch rechtwinkliges Abkanten der Schenkel des Winkelprofiles 1 gebildet sein.

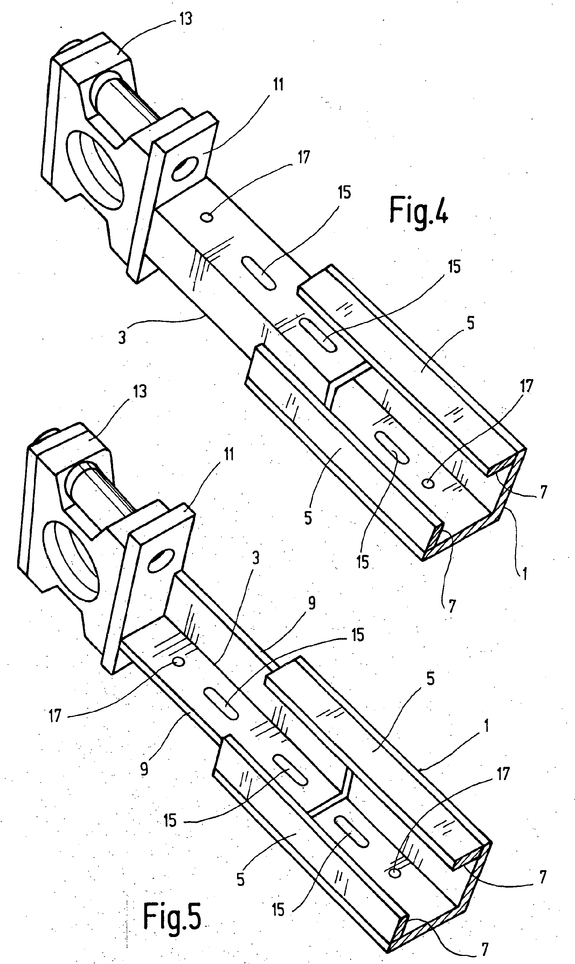

Fig. 3 und 4 zeigen die Variante des Befestigungssystemes, bei der die Trägereinheit eine geschlossene Profilgestalt besitzt, wobei in Fig. 3 die Winkelprofile 3 und 1 auseinandergezogen gezeichnet sind, während Fig. 4 den Zustand bei einer gewünschten Längeneinstellung zeigt. Bei diesem Ausführungsbeispiel ist an dem dem Halteelement zugekehrten Ende des Winkelprofiles 3 eine Trägerplatte 11 angeschweißt, die eine zur Verschieberichtung der Trägereinheit senkrechte Anbringebene bildet und mit der ein Halteelement in Form einer handelsüblichen Rohrschelle 13 verschraubt ist.

Fig. 4 zeigt die gleiche Variante des Befestigungssystemes wie sie in Fig. 3 dargestellt ist, wobei jedoch das Winkelprofil 3 relativ zum Winkelprofil 1 in eine Einstellposition verfahren ist, die einer gewünschten Gesamtlänge der Trägereinheit entspricht.

Die Darstellung gemäß Fig. 5 unterscheidet sich von Fig. 4 insofern, als das Winkelprofil 3 in solcher Einbauposition im Winkelprofil 1 geführt ist, dass die Trägereinheit eine offene Profilform hat. Wie bereits erwähnt, gestaltet sich bei dieser Variante die gegenseitige Fixierung der Winkelprofile 3 und 1 in gewünschter Lageeinstellung besonders einfach, weil die Schenkel der Winkelprofile großflächig aneinander liegen. Langlöcher 15 in den Schenkeln der Winkelprofile 1 und 3 können hierbei eine kraftschlüssige Fixierung mittels Verschrauben ermöglichen. Alternativ können Rundlöcher 17 zur Bildung formschlüssiger Verschraubungen vorgesehen sein. Es versteht sich, dass die Fixierung auch andersartig erfolgen kann, beispielsweise durch Schweißen, Kleben oder Klemmen.

Die letztgenannten Möglichkeiten der gegenseitigen Fixierung der Winkelprofile 1 und 3 kommen insbesondere dann in Frage, wenn entsprechend der Varianten gemäß Fig. 2, 3 und 4 eine geschlossene Profilgestaltung der Trägereinheit vorgesehen ist.

## Patentansprüche

1. Befestigungssystem, um Halteelemente (13) für die Aufnahme von Bauteilen lageeinstellbar an einer tragenden Basis zu fixieren, mit einer sich zwischen Halteelement (13) und Basis erstreckenden, längeneinstellbaren Trägereinheit, die zwei aneinander längs verschiebbare, jeweils rechtwinklige und gleichschenklige Winkelprofile (1, 3) aufweist, von denen das eine Winkelprofil (1) längs seiner Schenkelenden je eine in das Innere des Profils ragende Führungskante (5) aufweist, die jede eine zum angrenzenden Schenkel senkrechte und zum entfernten Schenkel parallele Führungsfläche (7) für anliegende Schenkelteile des anderen Winkelprofils (3) bildet.

2. Befestigungssystem nach Anspruch 1, **dadurch gekennzeichnet, dass** die Länge der Schenkel des die Führungskanten (5) aufweisenden Winkelprofils (1) um die Materialstärke der Führungskanten (5) größer ist als die Länge der Schenkel des anderen Winkelprofils (3) und dass die Führungskanten (5) an den Schenkelenden des zugehörigen Winkelprofils (1) so angeordnet sind, dass die für die Anlage des anderen Winkelprofils (3) verbleibende freie Schenkellänge durch die Materialstärke der Führungskanten (5) an die kürzere Länge der Schenkel des letztgenannten Winkelprofils (3) angepasst wird.

3. Befestigungssystem nach Anspruch 2, **dadurch gekennzeichnet, dass** die Winkelprofile (1, 3) derart aneinander geführt sind, dass das die kürzeren Schenkel aufweisende Winkelprofil (3) an seiner Profilaußenseite mit beiden Schenkeln ganzflächig an den Schenkeln des die Führungskanten (5) aufweisenden Winkelprofils (1) und mit den Endrändern (9) seiner Schenkel an der ins Profilinnere weisenden Führungsfläche (7) der Führungskanten (5) des diese aufweisenden Winkelprofils (1) geführt ist.

4. Befestigungssystem nach Anspruch 2, **dadurch gekennzeichnet, dass** das die kürzeren Schenkel aufweisende Winkelprofil (3) an seinen Schenkelenden an den ins Innere des Profils weisenden Führungsflächen (7) der Führungskanten (5) des diese aufweisenden Winkelprofils (1) geführt sind.

5. Befestigungssystem nach einem der Ansprüche 1 bis 4, **dadurch gekennzeichnet, dass** das die längeren Schenkel aufweisende Winkelprofil (1) der Trägereinheit mit der Basis verbunden ist und dass das die kürzeren Schenkel aufweisende Winkelprofil (3) mit dem Halteelement (13) in Verbindung ist.

6. Befestigungssystem nach Anspruch 5, **dadurch gekennzeichnet, dass** das Halteelement (13) an einer Trägerplatte (11) angeordnet ist, die sich am Ende des die kürzeren Schenkel aufweisenden Winkelprofils (3) senkrecht zur Verschieberichtung der längeneinstellbaren Trägereinheit erstreckt.

7. Befestigungssystem nach Anspruch 6, **dadurch gekennzeichnet, dass** ein Halteelement in Form einer Befestigungsschelle (13) für rohr- oder strangartige Bauteile mit der Trägerplatte (11) verschraubt ist.

8. Befestigungssystem nach einem der Ansprüche 1 bis 7, **dadurch gekennzeichnet, dass** einer und/oder beide Schenkel des einen und/oder anderen Winkelprofils (1, 3) mit Befestigungsmitteln (15, 17) zur Festlegung der durch Längsverschiebung der Winkelprofile (1, 3) eingestellten Länge der Trägereinheit versehen ist bzw. sind.

9. Befestigungssystem nach Anspruch 8, **dadurch gekennzeichnet, dass** für eine kraftschlüssige Lagefestlegung der Winkelprofile (1, 3) relativ zueinander Langlöcher (15) für eine Verschraubung in einem und/oder beiden Schenkeln der Winkelprofile (1, 3) vorgesehen sind
